# EUROPEAN PATENT APPLICATION

(11) **EP 1 521 208 A1**
(43) Date of publication of application: **06.04.2005**
(21) Application number: 04291520.7
(22) Date of filing: 16.06.2004
(51) Int. Cl.: G06K 19/077

(54) **Electronic identification document**

(30) Priority: 01.10.2003 EP 03292426; 19.12.2003 EP 03293268; 12.02.2004 EP 04290368
(71) Applicant: Axalto S.A., 92120 Montrouge (FR)
(72) Inventor: Cheramy, Severine c/o Schlumberger Systèmes, 92120 Montrouge (FR); Leibenguth, Joseph c/o Schlumberger Systèmes, 92120 Montrouge (FR); Reignoux, Yves, Schlumberger Systèmes, 92120 Montrouge (FR); Groeninck, Denis, c/o Schlumberger Systèmes, 92120 Montrouge (FR)

(57) **Abstract**

The identification instrument (11) comprises:
at least one flexible sheet (13), said one flexible sheet including at least two layers (14, 15),
an embedded module (16) positioned between the at least two layers (14, 15), said module comprising:
   a flexible support layer (17);
   an antenna (18) etched on said flexible support layer (17); and
   an electronic radio frequency (RF) component (20) to store identification data, said RF component (20) connected to said antenna (18) and fixed on the flexible support layer (17).

A method for making such an instrument is also disclosed.

## Description

The invention is related to identification documents and method for making them.

Nowadays, identification documents are paper booklets, such as passport, or plastic cards containing personal data of the bearer such as his/her name, birth date, address and photograph.

An increase in security requirements has pushed civil authorities toward an electronic identification document. It means that biographic and biometrics authentication data are included in a secure electronic component embedded in this document.

Typically, smartcards, which are plastic cards with an embedded secured microcontroller, are well-known to contain this type of personal data in a secure manner. They can be used in automatic recognition and/or transaction system by exchanging through cryptographic means their personal data with the central database of the system to allow the bearer of the smartcard to access to a specific service or building.

Smartcards are classically divided into two categories. The first one uses some electrical pads to connect the microcontroller to the system. The second category, often called contactless smartcards, uses radio frequency waves to communicate. The International Standard Organization (ISO) has developed two standards, the ISO-14443A and the ISO-14443B, to define the characteristics of this radiofrequency interface.

Contactless smartcards are manufactured by lamination of an inlet between two or more sheets of plastics. An inlet is a plastic sheet on which a radio frequency (RF) microcontroller and an antenna connected thereto are integrated.

However, there is also a strong request from national authorities to be able to integrate the electronics of a contactless smartcard into a paper document. A passport is a typical example.

In many countries, national authorities desire and request development of passports that are made more resistant against forgeries, which is easily accomplished with paper documents. Amongst these requests, the need to integrate a secured microcontroller with radio frequency (RF) capabilities inside a passport has emerged as a privileged way to combine the security of electronics with the easiness of connecting to central databases to simplify customs processing or border entries.

However, the integration of standard manufacturing processes for smartcards in the manufacturing of passport is not very efficient. The resulting product is a passport with a rigid plastic cover that is neither very appealing nor efficient as a support to carry visas and the like.

The goal of the invention is to develop an identification document such as a passport which offers the flexibility of a paper document but with the integration of a RF component.

The object of the invention is an identification document comprising at least one flexible sheet, said one flexible sheet including at least two layers, wherein an embedded module is positioned between the at least two layers, said module comprising a flexible support layer, an antenna etched on said flexible support layer, and an electronic radio frequency (RF) component to store identification data, said RF component connected to said antenna and fixed on the flexible support layer.

Another object of the invention is a method for making an identification instrument comprising at least one flexible sheet, said flexible sheet including a first and a second layers, wherein said method comprises:
forming an embedded electronic module by:
   - providing a flexible support layer;
   - etching an antenna on said flexible support layer;
   - connecting an electronic radio frequency (RF) component to said antenna and fixing it on the flexible support layer; and
   - positioning the embedded electronic module between the first and the second layer.

Other features of the invention are:
- the flexible support layer is made of epoxy glass, polymer, polyamide or kapton,
- the flexible support layer has a thickness in the range of 0.05 to 0.15 mm,
- the thickness of the flexible support layer is 0.1 mm,
- the identification instrument is a passport document,
- the identification instrument is an identification card,
- the electronic RF component comprises a memory for storing visa related information.

For a better understanding of the present invention, reference will now be made, by way of example, to the accompanying drawings, in which:
- figure 1 is a schematic representation of a contactless smartcard according to the prior art,
- figure 2 is a view of an identification document according to aspects of the invention,
- figure 3 is a schematic representation of a module used in an identification document according to aspects of the invention.
- figure 4 is a schematic representation of a cover of an identification document according to aspects of the invention.

Corresponding numerals and symbols in the different figures refer to corresponding parts, unless otherwise indicated.

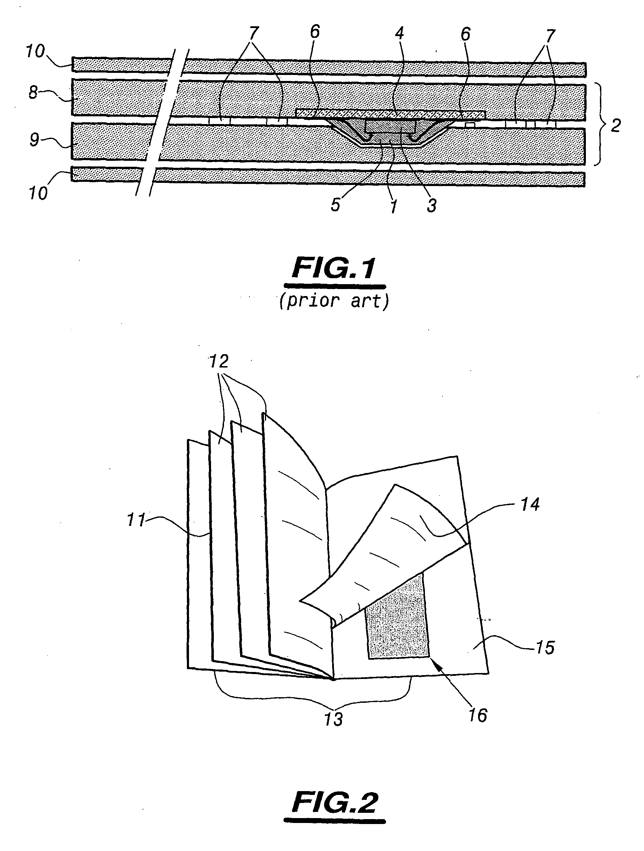

In figure 1, the prior art module 1 is embedded inside a prelaminated inlet 2. The module 1 comprises an integrated circuit 3 connected to a support 4. The circuit 3 and its connections are protected by a resin 5. The support 4 has electrical pads 6 connected to the circuit 3. An antenna 7 is etched on a first plastic layer 8 of the inlet and connected to the electrical pads 6. Then a second plastic layer 9 is laminated onto the first layer 8 to create the inlet 2. The inlet 2 is inserted between other external plastic layers 10 to finalise the contactless smartcard.

In a variant of the prior art, not represented, the manufacturing of the smartcard uses the Flip-Chip technology. In other words, rather than using a module, the component is turned over on the antenna and bumps connect the chips to the antenna pads.

A prelaminated inlet is rigid and has a typical thickness of 0.4 - 0.45 mm.

In a preferred embodiment, figure 2, a passport 11 is composed of a booklet of sheets of paper 12 and a cover 13. This cover 13 includes at least two layers 14, 15 with an electronic module 16 inserted between these two layers.

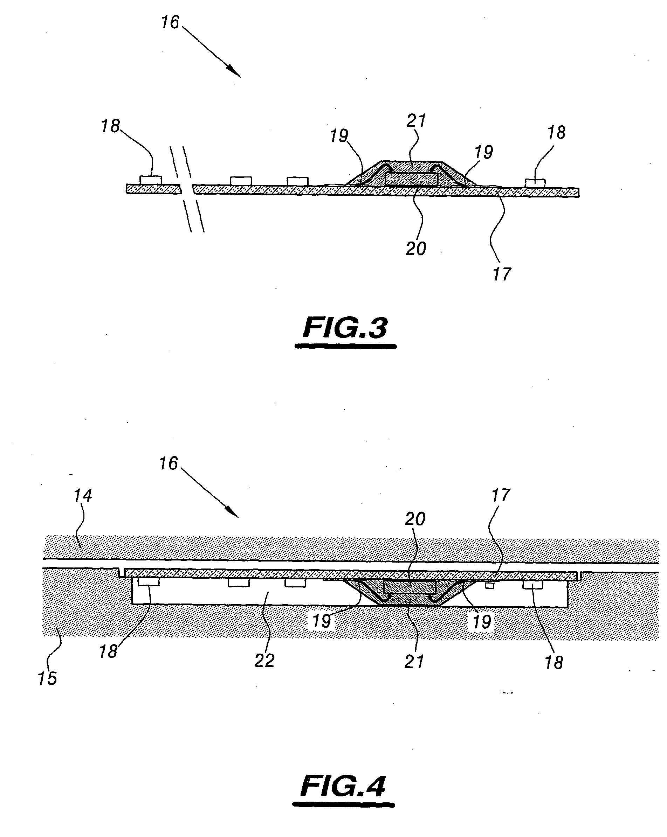

The module 16, in figure 3, includes a support 17. This support is made using a polymer material such as epoxy glass, polymer, polyamide or kapton. Its thickness is in the range 0.05 - 0.15 mm, preferably 0.1 mm, in order to achieve a high degree of flexibility.

By using standard manufacturing techniques from electronics printed board industry, an antenna 18 is etched onto the support 17. This antenna 18 has two electric pads 19 on which a RF microcontroller 20 is connected by wire bonding. An epoxy resin 21 is dispatched on top of the microcontroller 20 and its connections to protect them.

Layer 15 of the cover of the passport includes a cavity 22, as shown in figure 4. The cavity 22 is used to glue the module 16 and the second layer 14 is laminated on top of the layer 15 to protect the module 16.

When finished, the passport incorporating the module 16 appears similar to a standard passport. Except for the small area where the RF component is disposed, the flexibility of the cover is identical to the flexibility of the cover of a standard passport. Further, the module and all electronic components are invisible.

The embodiment was described for one electronic component. However, it will be obvious for the person skilled in the art to adapt the technology described to two or more electronics components. For example, a battery can be added to the module to supply the electrical power to the RF component.

The RF micro-controller is chosen among the standard microcontrollers for smartcards. For instance, the ST19RF08 from STMicroelectronics, of Geneva, Switzerland, has the processing power, data storage, security and RF interface.

With these types of processors, it is possible to integrate different applications on the same chip.

For a passport, in parallel with the personal data contained in the passport itself, the microcontroller contains and processes electronics visas.

Visa information, such as validity, stay, countries visited, place of issue, date of issue are electronically downloaded in the passport with a contactless transmitter in consulates or official places that issue visas. The traveller's information is then displayed and verified when transiting through a customs clearance area in various destination countries. Thereafter, an electronic stamp, equivalent to a physical stamp, is written by the customs clearance personnel into the microcontroller upon verification and clearance.

## Claims

1. An identification instrument (11) comprising:
at least one flexible sheet (13), said one flexible sheet including at least two layers (14, 15),
an embedded module (16) positioned between the at least two layers (14, 15), said module comprising:
a flexible support layer (17);
an antenna (18) etched on said flexible support layer (17); and
an electronic radio frequency (RF) component (20) to store identification data, said RF component (20) connected to said antenna (18) and fixed on the flexible support layer (17).

2. The identification instrument (11) according to claim 1, wherein the flexible support layer (17) is made of epoxy glass, polymer, polyamide or kapton.

3. The identification instrument (11) according to claim 1 or 2, wherein the flexible support layer (17) has a thickness in the range of 0.05 to 0.15 mm.

4. The identification instrument (11) according to claim 3, wherein the thickness of the flexible support layer (17) is 0.1 mm.

5. The identification instrument (11) according to any one of the preceding claims, wherein the identification instrument is a passport document.

6. The identification instrument (11) according to any one of the claims 1 to 4, wherein the identification instrument is an identification card.

7. The identification instrument (11) according to any one of the preceding claims, wherein the electronic RF component (20) comprises a memory for storing visa related information.

8. A method for making an identification instrument (11) comprising at least one flexible sheet (13), said flexible sheet including a first and a second layers (14, 15), wherein said method comprises:
forming an embedded electronic module (16) by:
providing a flexible support layer (17);
etching an antenna (18) on said flexible support layer (17);
connecting an electronic radio frequency (RF) component (20) to said antenna (18) and fixing it on the flexible support layer (17); and
positioning the embedded electronic module (16) between the first (14) and the second (15) layer.
